# EUROPÄISCHE PATENTANMELDUNG

(11) **EP 3 569 901 A1**
(43) Veröffentlichungstag der Anmeldung: **20.11.2019**
(21) Anmeldenummer: 19155414.6
(22) Anmeldetag: 05.02.2019
(51) Int. Cl.: F16K 1/44, F16K 49/00

(54) **VENTILKOMBINATION**

(30) Priorität: 15.05.2018 DE 102018207522
(71) Anmelder: Evoguard GmbH, 93149 Nittenau (DE)
(72) Erfinder: Justl, Johann, 93149 Nittenau (DE); Sauer, Martin, 93149 Nittenau (DE)
(74) Vertreter: Grünecker Patent- und Rechtsanwälte PartG mbB

(57) **Zusammenfassung**

Ventilkombination zum Verbinden von einer ersten Flüssigkeitsraumbegrenzung (3, 3a) mit einer zweiten Flüssigkeitsraumbegrenzung (4, 4a) über einen Sicherheitsraum, umfassend ein erstes Ventil mit einem ersten Ventilsitz (1b) und einem ersten Verschlussteil (1a) und ein zweites Ventil mit einem zweiten Ventilsitz (2b) und einem zweiten Verschlussteil (2a), wobei das erste Ventil zum Abdichten der ersten Flüssigkeitsraumbegrenzung (3, 3a) und das zweite Ventil zum Abdichten der zweiten Flüssigkeitsraumbegrenzung (4, 4a) gegenüber dem Sicherheitsraum (5) vorgesehen ist, wobei die Ventilkombination in den Ventilsitzen Mittel zur thermischen Isolation des Sicherheitsraumes (5) gegenüber der ersten und zweiten Flüssigkeitsraumbegrenzung (3, 3a, 4, 4a) umfasst. Ein Doppelsitz- und/oder Doppeldichtventile, eine Maschine zum Befüllen von Behältern und eine Vorrichtung im Bereich der Lebensmittel- und Genussmittelhandhabung, die eine solche Ventilkombination umfassen.

## Beschreibung

Die Erfindung bezieht sich auf eine Ventilkombination zum Verbinden von zwei Flüssigkeitsraumbegrenzungen.

Ventilkombinationen zum Verbinden von Rohren sind aus dem Stand der Technik bekannt. Ein Beispiel für eine solche Ventilkombination, die in dem beschriebenen Fall in einem Doppelsitz- und/oder Doppeldichtventil umfasst ist, ist in der EP 2 592 312 beschrieben. Solche Ventilkombinationen finden im Bereich der Lebensmittelverarbeitung, z.B. im aseptischen Bereich, Anwendung. Zwischen den Ventilgehäusen bzw. Rohren ist ein Sicherheitsraum (auch Leckageraum genannt) vorgesehen, über den die Rohre durch die Ventile verbunden werden können. Dieser Sicherheitsraum kann unabhängig von den beiden Ventilgehäusen bzw. Rohren gereinigt und desinfiziert werden, insbesondere beispielsweise mit Dampf sterilisiert werden.

Für einige Anwendungsbereiche ist es wünschenswert, wenn dieser Sicherheitsraum durchgehend unter Dampf steht, so dass sich keine Bakterien im Sicherheitsraum anlagern können. Die Wand des Sicherheitsraumes ist jedoch typischerweise aus Metall gefertigt, da dieses Material gut zu reinigen und zu desinfizieren ist. Dies kann allerdings dazu führen, dass sich Wärme durch die Wände des Sicherheitsraums ausbreitet und die Produkte in den Ventilgehäusen oder Rohren (insbesondere z.B. im Sitzbereich eines Ventils) anbacken. Diese Beläge können sich lösen und das Produkt verunreinigen. Zudem kann ein derartiges Anbacken die Reinigung erschweren, und ein Auseinanderbauen der Ventilkombination und Rohre zur manuellen Reinigung erforderlich machen.

Der Erfindung liegt die Aufgabe zu Grunde, eine verbesserte Ventilkombination anzugeben.

Die Erfindung umfasst insbesondere eine Ventilkombination nach Anspruch 1, ein Doppelsitz- und/oder Doppeldichtventil nach Anspruch 13, eine Maschine zum Befüllen von Behältern nach Anspruch 14, sowie eine Vorrichtung im Bereich der Lebensmittel- und Genussmittelhandhabung nach Anspruch 15. Vorteilhafte Ausführungsformen sind in den abhängigen Ansprüchen beschrieben.

Erfindungsgemäß umfasst die Ventilkombination zum Verbinden von einer ersten Flüssigkeitsraumbegrenzung mit einer zweiten Flüssigkeitsraumbegrenzung über einen Sicherheitsraum ein erstes Ventil mit einem ersten Ventilsitz und einem ersten Verschlussteil und ein zweites Ventil mit einem zweiten Ventilsitz und einem zweiten Verschlussteil. Die Verschlussteile können beispielsweise als Teller, Kegel, Kugel oder Nadel ausgebildet sein. In einigen Ausführungsformen werden für das erste und zweite Ventil als Verschlussteile Teller verwendet, das erste und zweite Ventil können also Tellerventile sein. Die jeweiligen Ventilteller (oder anders Verschlussteile) sind typischerweise durch einen Dichtungsring oder ein anderes Dichtungsmittel gegenüber dem Ventilsitz abgedichtet, wenn das Ventil geschlossen ist.

Vorteilhafterweise können das erste Ventil und das zweite Ventil voneinander unabhängig ansteuerbar sein.

Eine Flüssigkeitsraumbegrenzung kann ein Rohr oder einen Rohrabschnitt umfassen. Sie kann optional ein (Ventil)Gehäuse umfassen, an oder in dem das erste oder zweite Ventil angeordnet sein können, oder als solches ausgebildet sein. Insbesondere kann eine Flüssigkeitsraumbegrenzung beispielsweise ein Gehäuse umfassen, das eine oder zwei Öffnungen zur Verbindung mit einem Rohr umfasst. Beispielsweise kann durch zwei Öffnungen das Ventilgehäuse mit zwei Rohrstücken verbunden werden, und somit in ein Rohr eingebracht, z.B. eingeschweißt werden. Optional können an dieser Öffnung oder diesen Öffnungen bereits Rohrstücke angebracht (z.B. angeschweißt) sein, was ein Anbringen in einem Rohr vereinfachen kann. Eine Flüssigkeitsraumbegrenzung kann alternativ oder zusätzlich einen Verbinder zwischen Ventilkombination, z.B. Ventilsitz, und einem Rohr umfassen.

Der Unterschied zwischen einem Verbinder und einem Ventilgehäuse kann beispielsweise darin liegen, dass - bei verschlossenem Ventil - ein Produkt, das sich in einem Rohr entlang des Rohres (entlang der Rohrachse) bewegen würde, das mit dem Ventilgehäuse verbunden ist oder verbunden werden kann, sich notwendigerweise durch das Ventilgehäuse hindurch bewegen würde, wohingegen bei einem Verbinder das Produkt sich, wenn es sich entlang des mit dem Verbinder verbundenen Rohres bewegt, sich am Verbinder vorbei bewegen könnte (ohne notwendigerweise durch ihn hindurch geführt zu werden). Anders beschrieben kann ein Ventilgehäuse so angeordnet sein oder werden, dass eine Rohrachse (eines mit dem Ventilgehäuse verbundenen Rohres) durch das Ventilgehäuse hindurch verläuft, wohingegen ein Verbinder so angeordnet oder anordenbar sein kann, dass die Rohrachse (eines mit dem Verbinder verbundenen Rohres) nicht durch den Verbinder hindurch verläuft.

In weiteren Ausführungsformen kann beispielsweise ein erstes Ventil in (oder an) einem ersten Ventilgehäuse angeordnet sein, und ein zweites Ventil (optional über einen Verbinder) in oder an einem Rohr.

Das erste Ventil ist zum Abdichten der ersten Flüssigkeitsraumbegrenzung gegenüber dem Sicherheitsraum vorgesehen und das zweite Ventil ist zum Abdichten der zweiten Flüssigkeitsraumbegrenzung gegenüber dem Sicherheitsraum vorgesehen. Zwischen den beiden Ventilen ist somit der Sicherheitsraum vorgesehen. Durch Betätigung der Ventile können die erste und zweite Flüssigkeitsraumbegrenzung über den Sicherheitsraum verbunden werden und somit Produkte von der ersten Flüssigkeitsraumbegrenzung in die zweite Flüssigkeitsraumbegrenzung gelangen.

Der Sicherheitsraum ist typischerweise durch eine Wand umgeben, die diesen umschließt und ihn typischerweise flüssigkeitsdicht abschließt. Typischerweise bilden die Ventilsitze des ersten und des zweiten Ventils einen Teil dieser Wand. Die Wand (insbesondere ihre Begrenzung nach innen) kann beispielsweise bei Draufsicht in Richtung der Achse (Öffnungsrichtung) des ersten und/oder zweiten Ventils im Querschnitt durch den Sicherheitsraum senkrecht dazu einen runden, z.B. (im Wesentlichen) kreisförmigen, Querschnitt haben.

Die Wand des Sicherheitsraumes kann ein, zwei (oder mehr) weitere, verschließbare Öffnungen haben (zusätzlich zu den Ventilöffnungen), durch die zum Beispiel Reinigungsmittel, Desinfektionsmittel und/oder Dampf eingeführt und weggeführt werden können. Im verschlossenen Zustand können diese Öffnungen insbesondere flüssigkeitsdicht verschlossen sein, so dass insbesondere durch diese Öffnungen kein Produkt aus dem Sicherheitsraum entweichen kann.

Erfindungsgemäß umfasst die Ventilkombination in den Ventilsitzen Mittel zur thermischen Isolation des Sicherheitsraumes gegenüber den ersten und zweiten Flüssigkeitsraumbegrenzungen.

Die erste und zweite Flüssigkeitsraumbegrenzung kann von der Ventilkombination umfasst sein, muss dies aber nicht sein.

Die Mittel zur thermischen Isolation können beispielsweise einen Hohlraum oder mehrere Hohlräume umfassen oder als solche ausgebildet sein.

Insbesondere kann beispielsweise im ersten und/oder zweiten Ventilsitz jeweils ein (um die Ventilöffnung) umlaufender Hohlraum ausgebildet sein, der im Ventilsitz so angeordnet ist, dass er zwischen dem Sicherheitsraum der ersten bzw. zweiten Flüssigkeitsraumbegrenzung angeordnet ist und somit den Sicherheitsraum thermisch von der ersten und zweiten eine Flüssigkeitsraumbegrenzung entkoppeln kann. Der Begriff "Ventilsitz" umfasst hierbei den Bereich, in dem ein Ventil aufsitzt (in der Flüssigkeitsraumbegrenzung oder im Sicherheitsraum) und das Verbindungsstück, mit dem dieser Bereich an das jeweils abzudichtende Gegenstück (also Sicherheitsraum oder Flüssigkeitsraumbegrenzung) verbunden ist. Der Ventilsitz kann ein- oder mehrteilig ausgebildet sein.

Ein Ventilsitz kann eine (metallische) erste und (metallische) zweite Seite umfassen, wobei - im Betriebszustand - die erste Seite dem Sicherheitsraum zugewandt ist. Die zweite Seite kann der Flüssigkeitsraumbegrenzung zugewandt sein oder mit der Flüssigkeitsraumbegrenzung verbunden sein, oder der dem Sicherheitsraum gegenüberliegenden Seite zugewandt sein. Wenn die zweite Seite des Ventilsitzes mit einem der Flüssigkeitsraumbegrenzung (insbesondere der Innenseite der Flüssigkeitsraumbegrenzung) zugewandten Teil verbunden ist, kann durch eine thermische Isolation der Wärmeeintrag in das Produkt durch die Temperatur (Dampf) im Sicherheitsraum reduziert werden, also der Sicherheitsraum von der Flüssigkeitsraumbegrenzung thermisch isoliert werden. Dies gilt umso mehr, wenn die zweite Seite der Innenseite einer Flüssigkeitsraumbegrenzung, also insbesondere dem Bereich, wo im Betrieb ein Produkt vorhanden sein kann, (mindestens teilweise) direkt zugewandt ist.

Die beiden Seiten des Ventilsitzes sind typischerweise (mindestens) im Bereich der Ventilöffnung und an den Außenbereichen des Sicherheitsraums (und optional insbesondere den Außenbereichen eines von einer Flüssigkeitsraumbegrenzung umfassten Rohres) miteinander verbunden. Die Verbindung erfolgt vorteilhafterweise in thermisch stark belasteten Bereichen (also insbesondere jenen Bereichen, wo durch Einbringen von Dampf in den Sicherheitsraum der Dampf direkt in Kontakt mit den Bauteilen treten kann und in einem gewissen Abstand dazu, z.B. allen Teilen, die weniger als 10 mm, z.B. weniger als 5 mm von Dampf entfernt sind, wenn Dampf in den Sicherheitsraum eingebracht wird), insbesondere beispielsweise um die Ventilöffnung herum, durch möglichst dünne Verbindungsstücke, die z.B. nur zwischen 1,5 mm und 3 mm Materialdicke aufweisen können. Zwischen den beiden Seiten des Ventilsitzes können ein (oder mehrere) Hohlräume angeordnet sein, die Mittel zur thermischen Isolation des Sicherheitsraums von der Flüssigkeitsraumbegrenzung sein können.

In anderen Ausführungsformen können die Mittel zur thermischen Isolation mehrere Hohlräume umfassen, und diese beispielsweise als voneinander getrennte Hohlräume ausgebildet sein, wobei die einzelnen Hohlräume entlang des Ventilsitzes umlaufend angeordnet sein können. Hierbei können die Hohlräume wieder zwischen einer ersten und zweiten Seite (wie zuvor beschrieben) des Ventilsitzes angeordnet sein. Somit kann das Risiko eines Anbackens eines Produktes insbesondere in den Sitzbereichen eines Ventils verhindert werden.

Die Mittel zur thermischen Isolation können in beiden Ventilsitzen gleich ausgebildet sein. In anderen Ausführungsformen können die Mittel zur thermischen Isolation im ersten Ventilsitz anders ausgebildet sein als im zweiten Ventilsitz. Die Mittel zur thermischen Isolation können beispielsweise an die Verlaufsrichtung eines von der Flüssigkeitsraumbegrenzung umfassten Rohrs angepasst sein. Beispielsweise können die Mittel zur thermischen Isolation in der Richtung, wo ein Rohr verläuft, gegenüber dem der Sicherheitsraum durch die Mittel zur thermischen Isolation isoliert werden soll, anders angeordnet sein als in eine Richtung, in die das Rohr nicht verläuft (z.B. können entlang des Rohrs breitere Hohlräume ausgebildet sein oder diese einen größeren Querschnitt in Richtung der Ventilachse des ersten und/oder zweiten Ventils haben).

Erfindungsgemäß kann durch einen Hohlraum die Materialstärke des Ventilsitzes reduziert sein gegenüber einer massiven Ausbildung des Ventilsitzes, insbesondere um das Volumen des Hohlraums. Somit kann die Materialstärke der ersten und/oder zweiten Seite des Ventilsitzes, der typischerweise aus Metall ausgebildet ist, und optional der Verbindung um die Ventilöffnung herum, bis auf beispielsweise reduziert sein, z.B. zwischen 1,5 mm und 3 mm betragen. Um den entsprechenden Stabilitätsverlust auszugleichen, kann beispielsweise in einem Bereich der Ventilkombination, die weniger stark thermisch belastet ist (zum Beispiel an der Außenseite von Sicherheitsraum und den Flüssigkeitsraumbegrenzungen) eine Verstärkung angebracht sein, zum Beispiel durch dickere Materialstücke oder Einschweißen von Verstärkungen.

Erfindungsgemäß kann der Hohlraum geschlossen sein, z.B. luftdicht verschlossen sein. Optional kann er unter Vakuum stehen oder mit einem (thermisch) isolierenden Gas oder Stoff gefüllt sein (wobei "thermisch isolierend" insbesondere bedeuten kann, dass das Material deutlich schlechter Wärme leitet, als das Material, in das es eingebracht ist, z.B. eine um mindestens 20% niedrigere Wärmeleitfähigkeit bei einer Temperatur von 100°C hat, z.B. mindestens 50%, z.B. mindestens 70% niedrigere Wärmeleitfähigkeit bei einer Temperatur von 100°C).

In anderen Ausführungsformen kann der Hohlraum (oder die Hohlräume) mit der Umgebung verbunden sein und mit einem (thermisch) isolierenden Stoff gefüllt sein. Der Hohlraum (oder die Hohlräume) können z.B. mit einem festen (thermisch) isolierenden Stoff oder mit Luft gefüllt, sein. Beispielsweise kann er durch einen Leckageabfluss mit der Umgebung verbunden sein, so dass - wenn Flüssigkeit oder Produkt aus dem Sicherheitsraum oder den Flüssigkeitsraumbegrenzungen in den Hohlraum leckt - der Flüssigkeitsaustritt detektiert werden kann.

In einigen Ausführungsformen kann der Hohlraum durch Luftkonvektion oder eine andere externe Kühlung gekühlt werden. Dazu kann er insbesondere Anschlüsse zur Zuleitung und Ableitung von entsprechenden kühlenden Mitteln aufweisen, durch die zum Beispiel Luft (oder andere Kühlgase) oder andere Kühlmittel, zum Beispiel Kühlflüssigkeit, zugeführt werden können.

Die Ventilkombination kann einen Körper umfassen, der die Wand des Sicherheitsraumes umfasst oder aus dieser besteht. Optional kann der Körper der Ventilkombination des Weiteren eine erste und/oder zweite Flüssigkeitsraumbegrenzung umfassen.

Dieser Körper der Ventilkombinationen kann einteilig ausgebildet sein. Insbesondere können beispielsweise aus einem herkömmlichen Sicherheitsraum aus dem Stand der Technik durch Aufschneiden, Ausspanen und anschließendes Zusammenschweißen Hohlräume in die Ventilsitze eingebracht werden und anschließend die Ventilsitze wieder zu einem Teil (z.B. durch Schweißen) verbunden werden. In alternativen Ausführungsformen können zusätzlich oder alternativ zusätzliche Teile, zum Beispiel (thermische) Isolationsmittel (z.B. Isoliergas, Isoliermaterial oder Vakuum) in den Ventilsitzen umfasst sein. In anderen Ausführungsformen können verschiedene Bauteile zu einem Teil zusammengeschweißt werden, so dass der Körper der Ventilkombination Mittel zur thermischen Isolation umfasst und einteilig ausgebildet ist.

Solche einteiligen Ausbildungsformen des Körpers sind insbesondere bei geschlossenen Hohlräumen in den Ventilsitzen, zum Beispiel mit Vakuum oder Isoliergas gefüllten Hohlräumen vorteilhaft, da somit eine höhere Dichtigkeit als bei bloßer Verwendung von Dichtungen zwischen Teilen erzeugt werden kann. Somit kann beispielsweise ein Leck in den entsprechenden Hohlräumen verhindert werden, oder zumindest dessen Wahrscheinlichkeit verringert werden.

Eine einteilige Ausführung der Wand des Sicherheitsraums kann vorteilhaft sein, da Bauteile mit einer einteiligen Ausführungsform typischerweise weniger Ablagemöglichkeiten für Keime bieten.

In anderen Ausführungsformen kann der Körper der Ventilkombination mehrteilig ausgebildet sein. Beispielsweise kann ein Ventilsitz zweiteilig (oder mehr als zweiteilig) ausgebildet sein, wobei insbesondere die einer Flüssigkeitsraumbegrenzung zugewandte Seite aus einem ersten Teil und die dem Sicherheitsraum zugewandte Seite aus einem zweiten Teil bestehen kann oder diesen umfassen kann.

Hierbei kann beispielsweise der dem Sicherheitsraum zugewandte Teil des Ventilsitzes in die Wand des Sicherheitsraums übergehen oder mit dieser verbunden sein. Die beiden Teile des Ventilsitzes können z.B. durch eine Schraubverbindung oder andere lösbare Verbindung verbunden sein. Optional kann zwischen den beiden Teilen des Ventilsitzes eine Dichtung angeordnet sein, die zwischen den beiden Teilen abdichtet. So eine Dichtung kann z.B. im Bereich, wo die beiden Teile im Sicherheitsraum oder in der ersten und/oder zweiten Flüssigkeitsraumbegrenzung aufeinandertreffen, angeordnet sein. In diesem Fall können beispielshaft die Mittel zur thermischen Isolation eine oder mehr Dichtungen, insbesondere zwischen zwei Teilen eines Ventilsitzes, umfassen, die jeweils gegenüber der Flüssigkeitsraumbegrenzung oder Sicherheitsraum abdichten.

Diese Dichtungen können insbesondere so angeordnet sein, dass die (metallischen) Teile des Ventilsitzes, z.B. in thermisch stark belasteten Bereichen, insbesondere um die Ventilöffnung herum, nicht in Kontakt miteinander stehen, sondern nur durch die Dichtung aufeinandertreffen und zwischen den (metallischen) Teilen ein Hohlraum verbleibt. Die (metallischen) Teile können z.B. nur in thermisch weniger belasteten Bereichen, zum Beispiel am Außenbereich der Wand des Sicherheitsraums und/oder der Flüssigkeitsraumbegrenzung aufeinandertreffen. "Außen am Sicherheitsraum" bezieht sich auf die der Außenseite zugewandten Seite der Wand des Sicherheitsraumes, wogegen "innen im Sicherheitsraum" den Bereich des Sicherheitsraums zwischen den Ventilen bezeichnet. Gleiches gilt entsprechend für die Flüssigkeitsraumbegrenzungen, bei denen "innen" die Seite der Flüssigkeitsraumbegrenzung beschreibt, in denen ein Produkt transportiert oder aufgehoben werden kann wohingegen "außen" die dem Produkt weggewandte Seite beschreibt, wobei "außen an der Flüssigkeitsraumbegrenzung" auch mit der Flüssigkeitsraumbegrenzung verbundene an der Flüssigkeitsraumbegrenzung befestigte Bauteile umfassen kann.

Insbesondere kann in solchen Ausführungsformen der Abstand zwischen den Metallteilen in verschiedenen Bereichen (zwischen den Seiten des Ventilsitzes) verschieden ausgebildet sein: Beispielsweise kann der Hohlraum (Abstand) zwischen zwei Teilen des Ventilsitzes im Bereich unmittelbar neben der Dichtung kleiner sein (damit die Dichtung gut hält), z.B. höchsten 50% davon betragen, als in anderen Bereichen, z.B. etwas weiter von der Ventilöffnung entfernt, bevor die Teile in einem dritten (weniger thermisch belastetem) Bereich dann (optional über ein weiteres (thermisch isolierendes) Material) aufeinander treffen können. Beispielsweise können die Teile verschraubt sein.

Erfindungsgemäß kann der Sicherheitsraum zwei Öffnungen für Zu- und Abführung von Reinigungsmitteln oder Desinfektionsmittel (wie z.B. Dampf) umfassen (zusätzlich zu den Öffnungen von ersten und zweiten Ventil). Beispielsweise können diese Öffnungen so angeordnet sein, dass (im Betriebszustand, wo die Ventilkombination eine erste und eine zweite Flüssigkeitsraumbegrenzung verbindet, aber optional das erste und zweite Ventil geschlossen sind) durch eine Öffnung Reinigungs- oder Desinfektionsmittel von oben oder schräg oben zugeführt werden kann und durch eine andere Öffnung das zugeführte Reinigungs- oder Desinfektionsmittel z.B. nach unten oder schräg unten wieder abfließen kann. Somit können die Öffnungen vollständig leer laufen und Reste des Reinigungsmittels oder Kondensatreste können sich nicht darin sammeln.

Insbesondere können diese Öffnungen für die Zu- und Abführung von Dampf bzw. Kondensat ausgebildet sein. Die Öffnungen sind jeweils verschließbar, so dass, wenn die beiden Rohre durch das erste und zweite Ventil verbunden werden sollen, die Verbindung des ersten mit dem zweiten Rohr durch den Sicherheitsraum erfolgen kann, ohne dass Flüssigkeiten oder andere Inhalte der Rohre aus dem Sicherheitsraum austreten können. Optional können die Öffnungen Anschlüsse, z.B. für Schläuche, Rohre oder ähnliches umfassen.

Erfindungsgemäß kann der Sicherheitsraum ein erstes und ein zweites Reinigungsventil an einer ersten und zweiten Öffnung des Sicherheitsraumes umfassen, die dazu geeignet sind, die Öffnungen zum Zuführen von Reinigungsmitteln oder Desinfektionsmittel zu öffnen und zu schließen, also insbesondere zu öffnen, wenn Reinigungs- oder Desinfektionsmittel durchgeführt werden sollen, und zu schließen, wenn die Flüssigkeitsraumbegrenzungen über das erste und zweite Ventil verbunden werden sollen.

Die beiden Reinigungsventile können beispielsweise auf zwei gegenüberliegenden Seiten des Sicherheitsraumes (z.B. bezüglich der Ventilachsen des ersten und/oder zweiten Ventils) angeordnet sein, so dass vom ersten Reinigungsventil eintretende Reinigungsflüssigkeit oder Desinfektionsmittel den Sicherheitsraum spült und dann ablaufen kann.

In einigen Ausführungsformen können Öffnungen oder Reinigungsventile am Sicherheitsraum senkrecht zu den Ventilachsen des ersten und/oder zweiten Ventils angeordnet sein, so dass - wenn die Ventile vertikal angeordnet sind, um übereinander angeordnete Flüssigkeitsraumbegrenzungen zu verbinden - Dampf horizontal durch den Sicherheitsraum geführt werden kann. Auch in dieser Ausführungsform können die beiden Öffnungen oder Reinigungsventile auf zwei gegenüberliegenden Seiten bezüglich des Sicherheitsraumes angeordnet sein.

Erfindungsgemäß kann die Ventilkombination des Weiteren Mittel zur thermischen Isolation des ersten und/oder zweiten Reinigungsventils von der ersten und/oder zweiten Flüssigkeitsraumbegrenzung umfassen. Insbesondere kann das erste Reinigungsventil durch Mittel zur thermischen Isolation, beispielsweise einen Hohlraum oder eine Nut gegenüber der ersten und/oder zweiten Flüssigkeitsraumbegrenzung thermisch isoliert sein, insbesondere im Bereich des Ventilsitzes des ersten und/oder zweiten Reinigungsventils.

Beispielsweise kann um die Öffnung des Sicherheitsraums, der als Ventilsitz für ein erstes Reinigungsventil dient herum, die Materialstärke der Wand des Sicherheitsraums geringer sein als in anderen Bereichen des Sicherheitsraums, insbesondere in Richtung der ersten oder zweiten Flüssigkeitsraumbegrenzung, so dass der Wärmefluss in Richtung der ersten und/oder zweiten Flüssigkeitsraumbegrenzung reduziert wird. Wenn das Reinigungsmittel zum Beispiel Dampf ist, wird die höchste Temperatur typischerweise im Bereich erreicht, wo das erste Reinigungsventil Reinigungsmittel oder Desinfektionsmittel, insbesondere Dampf, in den Sicherheitsraum einbringen kann.

Optional kann auch das zweite Reinigungsventil thermisch von der ersten oder zweiten Flüssigkeitsraumbegrenzung isoliert sein, insbesondere durch Hohlräume, Nuten oder Ähnliches thermisch isoliert werden, so dass Wärmeleitung in Richtung der ersten und/oder zweiten Flüssigkeitsraumbegrenzung reduziert wird.

Erfindungsgemäß kann die Ventilkombinationen in einem Doppelsitz- und/oder Doppeldichtventil umfasst sein. Insbesondere umfasst die Erfindung auch ein Doppelsitz- und/oder Doppeldichtventil, das eine Ventilkombination wie zuvor beschrieben umfasst. Das Doppelsitz- und/oder Doppeldichtventil kann insbesondere als erstes und zweites Ventil zwei Tellerventile umfassen, die einzeln ansteuerbar sein können und eine gemeinsame Öffnungsrichtung haben sowie entlang einer gemeinsamen Achse geöffnet werden können. Die beiden Teller können mit Aufsitzdichtungen auf den Ventilsitzen aufsitzen.

Eine Ventilkombination kann insbesondere, aber nicht nur, in Doppelsitz- und/oder Doppeldichtventil auch noch folgende zusätzliche Merkmale umfassen:
Optional im Sicherheitsraum oder einer Flüssigkeitsraumbegrenzung vorhandene Ventilbetätigungseinrichtungen können durch einen Faltenbalg (typischerweise aus Metall) oder eine Membran gegenüber dem Sicherheitsraum oder Rohr bzw. Gehäuse flüssigkeitsdicht abgedichtet sein. Insbesondere können die Ventilbetätigungseinrichtungen des ersten und zweiten Verschlussteils durch einen Faltenbalg oder eine Membran abgedichtet sein. Ein erstes Reinigungsventil kann so angeordnet sein, dass daraus austretende Reinigungsflüssigkeit nicht direkt den Faltenbalg beaufschlagt, sondern vielmehr den Sicherheitsraum oder das erste oder zweite Ventil, z.B. einen ersten oder zweiten Ventilteller.

Die Erfindung umfasst des Weiteren eine Maschine zum Befüllen von Behältern, die ein oder mehrere Ventilkombinationen, beispielsweise in einem oder mehreren Doppelsitz- und/oder Doppeldichtventil, aber nicht notwendigerweise nur in solchen, wie zuvor beschrieben umfasst.

Die Erfindung umfasst des Weiteren eine Vorrichtung im Bereich der Lebensmittel- und Genussmittelhandhabung, wie beispielsweise eine Abfüllanlage und/oder ein Tanklager, insbesondere beispielsweise in einem aseptischen Bereich, die eine oder mehrere Ventilkombinationen umfasst. Sie kann insbesondere ein oder mehrere Doppelsitz- und/oder Doppeldichtventil wie zuvor beschrieben umfassen.

Weitere vorteilhafte Ausführungsformen werden in den Figuren beschrieben. Hierbei zeigt:
Figur 1a einen Querschnitt durch eine Ventilkombination, und Figuren 1b und 1c Details der Figur 1a;
Figur 2a einen Querschnitt durch eine Ventilkombination, und Figuren 2b und 2c Details der Figur 2a;
Figur 3a einen Querschnitt durch eine Ventilkombination und Figur 3b ein Detail der Figur 3a.

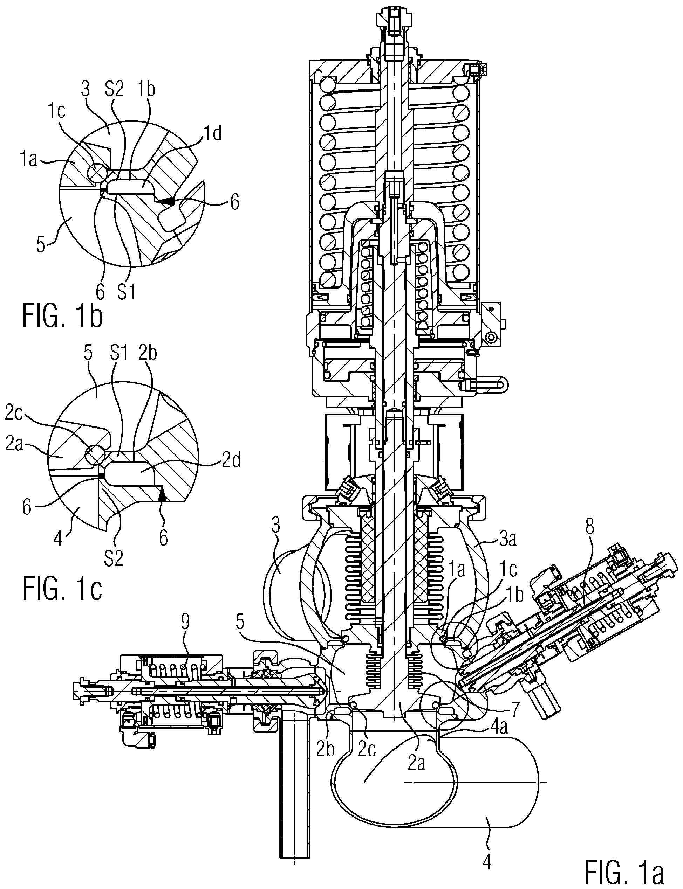

Figur 1a zeigt eine erfindungsgemäße Ventilkombination in einem Doppelsitz und/oder Doppeldichtventil. Die Ventilkombination umfasst ein erstes Ventil mit einem Verschlussteil 1a, hier beispielhaft einem Ventilteller, und Ventilsitz 1b und ein zweites Ventil mit Verschlussteil 2a, hier beispielhaft einen Ventilteller, und Ventilsitz 2b. Die Ventilkombination ist dazu ausgebildet, eine erste Flüssigkeitsraumbegrenzung (3, 3a) mit einer zweiten Flüssigkeitsraumbegrenzung (4, 4a) über einen Sicherheitsraum 5 zu verbindenden. In der gezeigten Ausführungsform umfasst die erste Flüssigkeitsraumbegrenzung ein Ventilgehäuse 3a, das optional mit Rohr bzw. Rohrstück 3 verbunden ist und in dem das Verschlussteil des ersten Ventils 1a, 1b angeordnet ist. Das zweite Ventil 2a, 2b ist beispielhaft über einen (hier zylinderwandförmigen) Verbinder 4a mit dem Rohr 4 (bzw. der Rohrwand) direkt verbunden, wobei somit die zweite Flüssigkeitsraumbegrenzung ein Rohr 4 und Verbinder 4a umfasst.

In anderen Ausführungsformen kann jede Flüssigkeitsraumbegrenzung ein Rohr umfassen, und z.B. sowohl das erste Rohr als auch das zweite Rohr mit dem Sicherheitsraum über ein Ventilgehäuse verbunden sein, nur das zweite Ventil über ein Ventilgehäuse mit dem zweiten Rohr verbunden sein (und das erste direkt mit dem Rohr) oder beide Ventile direkt (optional über einen Verbinder) mit einem Rohr verbunden sein.

Im gezeigten Beispiel öffnet sich das erste Ventil in Richtung des Ventilgehäuses 3a, und das zweite Ventil in den Sicherheitsraum 5 hinein. Dies ist jedoch nur eine von mehreren möglichen Anordnungen der Ventile. In anderen Ausführungsformen können sich die Ventile anders öffnen, z.B. beide in den Sicherheitsraum hinein, oder in die erste und zweite Flüssigkeitsraumbegrenzung hinein öffnen.

An den Ventiltellern 1a und 1b angebracht sind optional Dichtungen 1c und 2c, die dazu ausgebildet sind, zwischen Ventilteller und Ventilsitz abzudichten. In anderen Ausführungsformen kann die Dichtung zwischen Ventilsitz und Verschlussteil anders ausgeführt sein oder nicht vorhanden sein.

In dem gezeigten Beispiel haben die beiden Ventile die beiden Verschlussteile 1a und 2a beispielhaft die gleiche Öffnungsrichtung, die beiden Ventile öffnen sich also beide jeweils (im Bild) nach oben. Sie können optional voneinander unabhängig ansteuerbar sein. In anderen Ausführungsformen können sich die beiden Ventile in andere Richtungen öffnen lassen. Insbesondere kann die Ventilkombination auch aus zwei einzelnen unabhängig zu steuernden Hauptventilen und seitlich angeordneten Reinigungsventilen bestehen ("block and bleed" Anordnung).

Erfindungsgemäß sind der Sicherheitsraum 5 und die Flüssigkeitsraumbegrenzungen (hier insbesondere Gehäuse 3a und Verbinder 4a) durch Mittel zur thermischen Isolation in den Ventilsitzen voneinander thermisch isoliert. Insbesondere sind in den Ventilsitz 1b, 2b beispielhaft Hohlräume als Mittel zur thermischen Isolation des Sicherheitsraumes 5 von den Flüssigkeitsraumbegrenzungen vorgesehen.

Vergrößerte Ausschnitte aus dem Querschnitt durch die Ventilkombination sind in Figur 1a und Figur 1b gezeigt. Figur 1a zeigt insbesondere ein Teil des Ventiltellers 1a, einen Querschnitt durch die Dichtung 1c zwischen Ventilteller 1a und Ventilsitz 1b sowie Hohlraum 1d, der hier das Mittel zur Isolierung des Sicherheitsraums von Flüssigkeitsraumbegrenzung 3a darstellt.

In Figur 1c ist ein vergleichbarer Ausschnitt aus dem Querschnitt durch das zweite Ventil mit Ventilteller 2a, Ventildichtung 2c, Ventilsitz 2b und Hohlraum 2d gezeigt, der wiederum thermisch den Sicherheitsraum 5 von Flüssigkeitsraumbegrenzung 4a (und 4) isoliert.

Die Verwendung von Schweißnähten 6, wie eingezeichnet, hat den Vorteil, dass Hohlräume 1d, 2d luftdicht verschlossen werden können. Insbesondere können diese beispielsweise mit Vakuum oder einem isolierenden Gas gefüllt sein.

In anderen Ausführungsformen sind diese Hohlräume nicht luftdicht abgeschlossen und haben Öffnungen zum Außenraum.

Wie in Figur 1 gezeigt, können, insbesondere wenn die Ventilkombination in einem Doppelsitz- und/oder Doppeltdichtventil angeordnet ist, die Ventilkombinationen im Sicherheitsraum einen Faltenbalg 7 (oder eine Membran) umfassen, der gegebenenfalls vorhandene Ventilbetätigungseinrichtungen im Sicherheitsraum vom Inneren des Sicherheitsraumes trennt. Gleichermaßen kann, wenn durch eine Flüssigkeitsraumbegrenzung Ventilbetätigungseinrichtungen umfasst sind, diese vom Inneren der Flüssigkeitsraumbegrenzung durch einen Faltenbalg oder eine Membran getrennt sein.

Die in der in Figur 1a gezeigte Ausführungsform umfasst des Weiteren beispielhaft weitere optionale Merkmale (andere Ausführungsformen der Erfindung sind die im Folgenden beschriebenen Merkmale nicht oder nur teilweise umfasst): Beispielsweise umfasst die in Figur 1a gezeigte Ausführungsform ein weiteres erstes Reinigungsventil 8 und ein zweites Reinigungsventil 9. In anderen Ausführungsformen können statt der Reinigungsventile andere Öffnungen und/oder mehr oder weniger Öffnungen und/oder Reinigungsventile umfasst sein.

Die beiden Reinigungsventile 8, 9 können insbesondere an einander gegenüberliegenden Seite des Sicherheitsraums bezüglich des ersten oder zweiten Ventils (oder der Öffnungsrichtung des ersten und/oder zweiten Ventils) angeordnet sein, so dass Reinigungsmittel aus dem ersten Reinigungsventil 8 in Sicherheitsraum 5 spült und diesen reinigt und anschließend durch Reinigungsventile 9 abgelassen werden kann. Typischerweise sind die Reinigungsventile 8 und 9 unabhängig von dem ersten und zweiten Ventil betätigbar.

Insbesondere kann es vorteilhaft sein, wenn das erste und zweite Ventil 1a, 1b und 2a, 2b geschlossen sein können, während die Reinigungsventile geöffnet sind oder geöffnet werden und umgekehrt. Somit erfolgt eine Reinigung des Sicherheitsraums 5 während Produkte in den Flüssigkeitsraumbegrenzung 3, 3a und 4, 4a durch die Reinigungsmittel nicht verunreinigt werden (und durch die Mittel zur thermischen Isolation, hier Hohlräume, in den Ventilsitzen auch thermisch weniger beeinträchtigt werden, als im Stand der Technik). Insbesondere kann Dampf als Reinigungs- und Desinfektionsmittel verwendet werden und der Sicherheitsraum während der gesamten Betriebsdauer, in der die Flüssigkeitsraumbegrenzungen 3, 3a, 4 nicht verbunden sind, unter Dampf stehen gelassen werden, ohne dass sich dieses negativ auf die Produkte in den Flüssigkeitsraumbegrenzungen 3, 3a, 4, 4a auswirkt (oder wobei zumindest die Zeit, bis die Produkte durch die thermische Beanspruchung, insbesondere in den Sitzbereichen, anbacken, sich verlängert).

In anderen Ausführungsformen können eine andere Anzahl oder eine andere Anordnung von Reinigungsventilen vorhanden sein und/oder das erste und zweite Ventil anders angeordnet sein. Mittel zur Isolation 1d und 2d, die hier beispielhaft als Hohlräume ausgebildet sind, können insbesondere umlaufend entlang des gesamten Ventilsitzes angeordnet sein. In anderen Ausführungsformen können diese abschnittsweise in den Ventilsitz eingebracht sein. Insbesondere können sie in anderen Ausführungsformen Mittel zur thermischen Isolation, insbesondere Hohlräume, beispielsweise verstärkt, vergrößert oder nur in Bereichen angeordnet sein, wo der Ventilsitz direkt entlang einem (vom Flüssigkeitsraumbegrenzung umfassten) Rohr verläuft, insbesondere wo eine Seite des Ventilsitzes einen Teil der Wand eines Rohres bildet.

Die Ventilsitze umfassen eine dem Sicherheitsraum zugewandte Seite S1 und eine vom Sicherheitsraum weg gewandte Seite S2. Die beiden Seiten sind typischerweise an der Ventilöffnung des ersten bzw. zweiten Ventils miteinander verbunden, in der Figur 1b, 1c durch eine Schweißung 6. In anderen Ausführungsformen können sie durch andere Verbindungsmittel, z.B. eine Dichtung, verbunden sein.

Die Dicke der Trennwand eines Ventilsitzes 1b, 2b auf der dem Sicherheitsraum 5 zugewandten Seite S1, kann in besonders thermisch belasteten Bereichen, typischerweise in der Nähe der Ventilöffnung, eine geringe Dicke, beispielsweise von etwa 2 mm, zum Beispiel zwischen 1,5 und 3 mm aufweisen. Auf der der Flüssigkeitsraumbegrenzung 3a, 4 zugewandten Seite des Ventilsitzes ist die Materialdicke nicht so entscheidend (sie kann z.B. zwischen 1,5 mm und 3 mm liegen oder mehr als 3 mm betragen). Sie muss lediglich erlauben, einen hinreichend großen Hohlraum 1d, 2d zwischen den beiden Seiten anzuordnen. Ein Hohlraum kann eine Dicke bzw. einen Durchmesser (z.B. gemessen entlang der Richtung der Ventilöffnungsrichtung (Ventilachse) des ersten und/oder zweiten Ventils im Querschnitt durch diese) von ca. 2-5 mm oder mehr aufweisen.

Die zur Stabilisierung der Ventilkombinationen notwendige Materialstärke kann die Ventilkombination insbesondere im Außenbereich, also an der Außenseite des Sicherheitsraums und der außen an der Flüssigkeitsraumbegrenzung liegenden Bereiche erfolgen. Wie man in Figur 1b, 1c beispielhaft erkennen kann, ist im Außenbereich des Gehäuses (Körpers) der Ventilkombination beispielhaft eine größere Materialstärke vorhanden, die gleichzeitig auch die notwendige Stabilität bereitstellen kann.

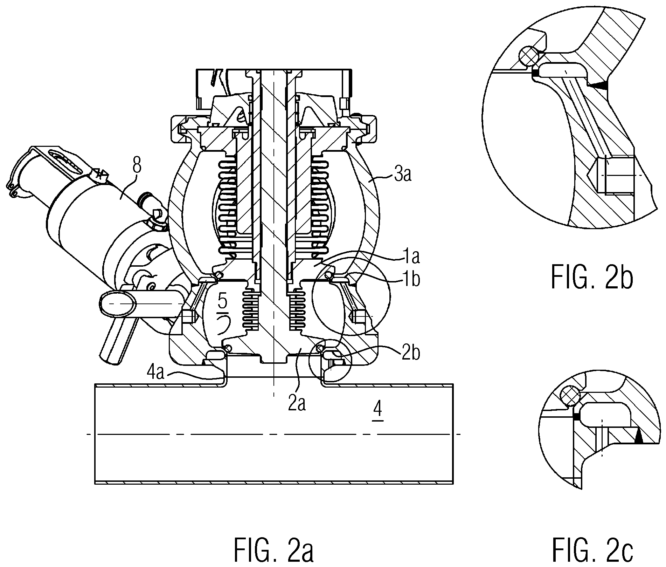

Figur 2 zeigt einen Querschnitt durch eine Ventilkombination, wobei die Ventilkombination optional ähnlich oder gleich der Ventilkombination wie in Figur 1a sein kann, oder eine andere Ventilkombination sein kann.

In Figur 2a sind schematisch Reinigungsventile 8, Sicherheitsraum 5 sowie erstes Ventil 1a, 1b, zweites Ventil 2a, 2b sowie Flüssigkeitsraumbegrenzung 4 eingezeichnet. Vergrößert dargestellt sind Ausschnitte davon in Figur 2b und 2c. Wie man in Figur 2b und 2c erkennen kann, sind sowohl Mittel zur thermischen Isolation, hier Hohlraum, im ersten Ventilsitz umfasst sein, als auch Mittel zur thermischen Isolation im zweiten Ventilsitzes. Die Hohlräume können Öffnungen (z.B. Bohrungen) aufweisen, die von den Hohlräumen nach außen führen. Die Öffnungen können insbesondere so ausgebildet sein, dass sie im Zustand, in dem die Ventilkombination eingebaut ist, um eine erste und eine zweite Flüssigkeitsraumbegrenzung zu verbinden, nach unten führen, so dass Flüssigkeit ablaufen kann.

Dadurch kann zum Beispiel eine Leckagedetektion erfolgen, zum Beispiel, wenn der Ventilsitz nicht mehr korrekt funktioniert, sondern Flüssigkeit aus einer Flüssigkeitsraumbegrenzung und/oder Sicherheitsraum in den Hohlraum eindringt.

In anderen Ausführungsformen können diese anders aufgeführt sein, als in den Figuren in 2b und 2c gezeigt, z.B. im Zustand, in dem die Ventilkombination zwei Flüssigkeitsraumbegrenzungen verbindet, horizontal oder nach oben.

Durch solche Öffnungen und optional vorhandene Anschlüsse (hier nicht gezeigt) können Kühlmittel, zum Beispiel eine Kühlflüssigkeit oder Ähnliches zugeführt werden. Wenn Flüssigkeit zugeführt wird, wird diese typischerweise durch einen Zufluss zugeführt und es gibt einen weiteren Abfluss, durch den das Kühlmittel, zum Beispiel die Flüssigkeit, dann wieder abgesaugt oder abgelassen werden kann. Insbesondere, wenn durch eine Öffnung (mit optionalem Anschluss) Kühlmittel hinzugeführt und durch eine Öffnung (mit optionalem Anschluss) abgeführt werden soll, können diese Öffnungen (mit optionalen Anschlüssen) so angeordnet sein, dass im Betriebszustand eine Öffnung nach oben (oder schräg oben) und eine Öffnung nach unten (oder schräg unten) verläuft.

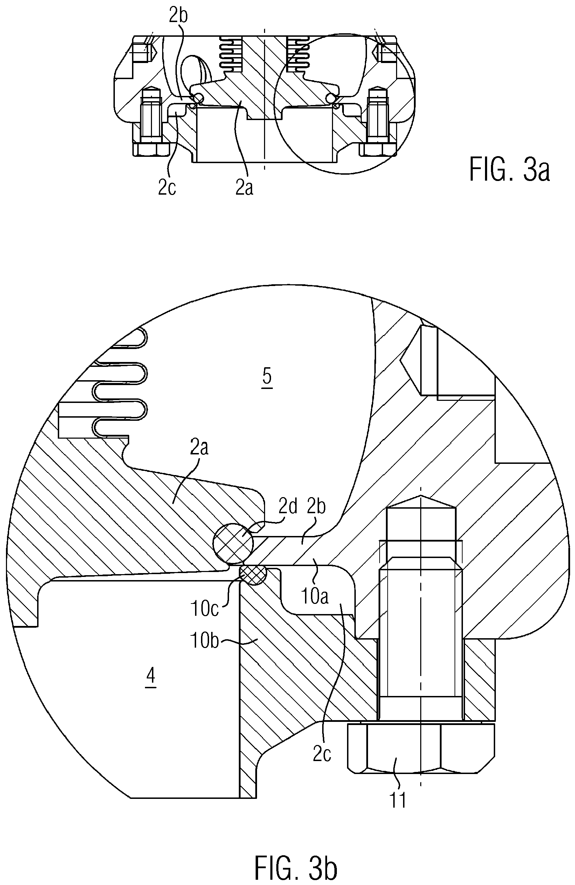

Figur 3 zeigt einen weiteren Querschnitt durch eine Ventilkombination, wobei Figur 3a Teile der Ventilkombination zeigt und Figur 3b vergrößerte Teile der Ventilkombination. In den in Figur 3a gezeigten Beispielen, ist nur ein Ausschnitt von einem Ventil gezeigt, dies kann das erste oder zweite Ventil einer Ventilkombination sein. In dem gezeichneten Beispiel werden aber zur Klarheit der Zeichnungen jeweils die Bezeichnungen und Referenzzeichen für das zweite Ventil genommen. Dies ist allerdings nicht einschränkend, es kann sich dabei auch um ein erstes Ventil handeln. (Bei Anordnung wie in den Figuren 1 und 2 gezeigt, wären beim erstem Ventil Flüssigkeitsraumbegrenzung und Sicherheitsraum vertauscht angeordnet gegenüber der jetzigen Bezeichnung.)

Figur 3a zeigt einen mehrteiligen Körper einer Ventilkombination. Insbesondere ist hier der Ventilsitz zweiteilig, wobei die beiden Teile des Ventilsitzes mit 10a und 10b bezeichnet werden, die optional gegen den Sicherheitsraum durch Dichtung 10c abgedichtet sein können. Dichtung 10c kann beispielsweise als Ringdichtung in einer Nut oder anders ausgebildet sein.

Zwischen den beiden Teilen des Ventilsitzes 10a und 10b befinden sich Mittel zur thermischen Isolation des Sicherheitsraums 5 vom Rohr in Form von Hohlraum 2c. Die beiden Teile 10a und 10b (in anderen Ausführungsformen kann der Ventilsitz mehr als zwei Teile umfassen) der Ventilkombinationen können beispielsweise durch Schrauben 11 oder andere lösbare Mittel miteinander verbunden sein. Optional kann in den Bereichen, wo die beiden Teile 10a und 10b miteinander verbunden werden, ein Mittel zur thermischen Isolation zwischen den beiden Teilen 10a, 10b angeordnet sein, z.B. eine thermisch isolierende Schicht.

Wie gezeigt kann Hohlraum 2c in verschiedenen Bereichen verschiedene Querschnitte aufweisen. Insbesondere in der Nähe der Dichtung (im Bereich direkt neben der Dichtung, z.B. um die Ventilöffnung herum) kann der Hohlraum mit kleinem Querschnitt (Dicke) in Richtung der Ventilöffnungsrichtung (des ersten und/oder zweiten Ventils) ausgebildet sein, so dass eine effektive Fixierung der Dichtung erfolgen kann (da die Dichtung zwischen beiden Teilen festgeklemmt ist). Vorteilhafterweise besteht jedoch etwas weiter von der Dichtung entfernt ein Hohlraum mit größerem Querschnitt (Dicke) zwischen den Körperteilen des Gehäuses 10a und 10b (Querschnitt gemessen in Richtung der Ventilöffnungsrichtung), da durch einen größeren Querschnitt besser thermisch isoliert werden kann.

Bei Betrachtung eines Querschnitts durch den Sicherheitsraum entlang der Achse (durch den Mittelpunkt der Ventilöffnung entlang der Öffnungsrichtung) des ersten und/oder zweiten Ventils kann die Messrichtung der Dicke (des Querschnitts) eines Hohlraums insbesondere eine Messung entlang der gewählten (jeweiligen) Achse sein. In einer beispielhaften Ausführungsform kann die Wand des Sicherheitsraums innen einen im Wesentlichen runden, z.B. im Wesentlichen kreisförmigen Durchmesser aufweisen bei Betrachtung im Querschnitt senkrecht zur Öffnungsrichtung des ersten und/oder zweiten Ventils.

In Bereichen weiter außen, d.h. weiter von der Achse des ersten und/oder zweiten Ventils kann der Hohlraum dann einen größeren Durchmesser bzw. Breite im Querschnitt aufweisen, z.B. mindestens 200% des Durchmessers bzw. Breite im Bereich innen.

In der folgenden Beschreibung wird ein Querschnitt durch eine Achse eines Ventils (Öffnungsrichtung) als Grundlage für die Beschreibung genommen.

Beispielsweise kann der Hohlraum bis zu einem bestimmten Abstand von der Ventilöffnung (Abstand von Ventilöffnung wird typischerweise senkrecht zur Achse des Ventils gemessen, und zwar insbesondere zum jeweiligen am nächsten gelegenen Rand der Ventilöffnung) des Ventils eine Dicke/Querschnitt von zwischen 0,5 und 1,5 mm haben. Diese Dicke kann er z.B. über einen (kreisförmigen) Bereich beginnend an der Dichtung bis zu einem Abstand von zwischen 3 mm und 20 mm vom Außenrand der Ventilöffnung (oder zwischen dem 0,2- und 1,5-fachen Breite der Dichtung vom Dichtungsrand angemessen).

Daran anschließen kann sich ein Bereich, in dem der Hohlraum 2c eine größere Dicke/Querschnitt hat, z.B. eine Dicke von zwischen 3 mm und 20 mm, z.B. über einen (Bereich, der an den Bereich mit der Dicke/Querschnitt von zwischen 0,5 und 1,5 mm anschließt, und von dort aus senkrecht (radial) nach außen geht. Er kann sich z.B. entlang einer Breite von zwischen 5 mm und 100 mm (oder zwischen dem 0,1- und 0,5-fachen des Durchmessers des Sicherheitsraums in horizontale Richtung und/oder des Rohrdurchmessers) erstrecken. Am Rand dieses Bereich kann bereits ein thermisch weniger belasteter Bereich erreicht sein.

In den thermisch weniger belasteten Außenbereichen des Ventilkörpers, hier radial außen von Verbinder 4a und Sicherheitsraum 5, können die Teile 10a und 10b des Körpers dann in unmittelbaren oder mittelbaren (zum Beispiel über Isolationsmittel) Kontakt stehen und aneinander befestigt sein, zum Beispiel durch Schrauben 9. Beispielsweise kann der thermisch weniger belastete Bereich einen Bereich umfassen oder als Bereich ausgebildet sein, wo jeder Punkt mehr als 5 mm, z.B. mehr als 10 mm von der Innenwand des Sicherheitsraums 5 entfernt ist.

Der in Figur 3a und 3b gezeigte mehrteilige Körper der Ventilkombination kann auch in den in Figuren 1a - 1c und 2a - 2c gezeigten Ventilkombinationen zum Einsatz kommen (nicht gezeigt).

## Patentansprüche

1. Ventilkombination zum Verbinden von einer ersten Flüssigkeitsraumbegrenzung (3, 3a) mit einer zweiten Flüssigkeitsraumbegrenzung (4, 4a) über einen Sicherheitsraum, umfassend ein erstes Ventil mit einem ersten Ventilsitz (1b) und einem ersten Verschlussteil (1a) und ein zweites Ventil mit einem zweiten Ventilsitz (2b) und einem zweiten Verschlussteil (2a), wobei das erste Ventil zum Abdichten der ersten Flüssigkeitsraumbegrenzung (3, 3a) und das zweite Ventil zum Abdichten der zweiten Flüssigkeitsraumbegrenzung (4, 4a) gegenüber dem Sicherheitsraum (5) vorgesehen ist, **gekennzeichnet dadurch, dass** die Ventilkombination in den Ventilsitzen Mittel zur thermischen Isolation des Sicherheitsraumes (5) gegenüber der ersten und zweiten Flüssigkeitsraumbegrenzung (3, 3a, 4, 4a) umfasst.

2. Ventilkombination nach Anspruch 1, wobei die Mittel zur thermischen Isolation einen Hohlraum umfassen.

3. Ventilkombination nach einem der Ansprüche 1 bis 2, wobei der Hohlraum geschlossen ist und optional unter Vakuum steht oder mit einem isolierenden Gas oder Stoff gefüllt ist

4. Ventilkombination nach einem der Ansprüche 1 bis 3, wobei der Hohlraum mit der Umgebung verbunden ist und mit einem isolierenden Stoff gefüllt ist.

5. Ventilkombination nach einem der Ansprüche 1 bis 4, wobei der Hohlraum mit der Umgebung verbunden ist, und optional durch Luftkonvektion oder eine andere externe Kühlung gekühlt werden kann.

6. Ventilkombination nach einem der Ansprüche 1 bis 5, wobei die Ventilkombination einen Körper umfasst, der die Wand des Sicherheitsraumes umfasst oder aus dieser besteht, und wobei der Körper der Ventilkombination einteilig ausgebildet ist

7. Ventilkombination nach einem der Ansprüche 1 bis 6, wobei der Körper der Ventilkombination mehrteilig ausgebildet ist

8. Ventilkombination nach einem der Ansprüche 1 bis 7, wobei die Mittel zur thermischen Isolation eine oder mehr Dichtungen (10c) umfassen.

9. Ventilkombination nach einem der Ansprüche 1 bis 8, wobei der Sicherheitsraum zwei Öffnungen oder Anschlüsse für Zuführung von Reinigungsmitteln oder Desinfektionsmitteln umfasst.

10. Ventilkombination nach einem der Ansprüche 1 bis 9, wobei der Sicherheitsraum ein erstes und ein zweites Reinigungsventil umfasst.

11. Ventilkombination nach Anspruch 10, wobei die Ventilkombination des Weiteren Mittel zur thermischen Isolation des ersten und/oder zweiten Reinigungsventils umfasst.

12. Ventilkombination nach einem der Ansprüche 1 bis 11, wobei die Betätigungseinrichtungen vom ersten und/oder zweiten Ventil durch einen Faltenbalg oder eine Membran abgedichtet sind.

13. Doppelsitz- und/oder Doppeldichtventil, **gekennzeichnet dadurch, dass** es eine Ventilkombination nach einem der Ansprüche 1 bis 12 umfasst.

14. Maschine zum Befüllen von Behältern, **gekennzeichnet dadurch, dass** sie eine oder mehrere Ventilkombinationen nach einem der Ansprüche 1 bis 12 umfasst.

15. Vorrichtung im Bereich der Lebensmittel- und Genussmittelhandhabung, wie beispielsweise eine Abfüllanlage oder ein Tanklager, insbesondere beispielsweise im aseptischen Bereich, **gekennzeichnet dadurch, dass** sie eine oder mehrere Ventilkombinationen nach einem der Ansprüche 1 bis 12 umfasst.
